# EUROPEAN PATENT APPLICATION

(11) **EP 4 307 060 A1**
(43) Date of publication of application: **17.01.2024**
(21) Application number: 21930276.7
(22) Date of filing: 21.09.2021
(51) Int. Cl.: G05B 19/05

(54) **DEVELOPMENT ASSISTANCE DEVICE, DEVELOPMENT ASSISTANCE METHOD, AND DEVELOPMENT ASSISTANCE PROGRAM**

(30) Priority: 11.03.2021 JP 2021039322
(71) Applicant: OMRON Corporation, Kyoto 600-8530 (JP)
(72) Inventor: HIGA, Yoshinori, Kyoto-shi, Kyoto 600-8530 (JP)
(74) Representative: Mewburn Ellis LLP
(86) International application number: PCT/JP2021/034614
(87) International publication number: WO 2022/190428

(57) **Abstract**

A development support device (100) extracts a first variable that is unused in a source code of a control program (210) for a control device (200) that controls a control target (300) from variables in a variable definition list that declares variables used in the source code, and acquires information for specifying a second variable used by the control target (300) in an execution state of the control program (210). The development support device (100) determines that a third variable that does not correspond to the second variable out of the first variable is delible from the variable definition list.

## Description

### TECHNICAL FIELD

The present disclosure relates to a technology for supporting development of a control program for a control device that controls a control target.

### BACKGROUND ART

A control device such as a programmable logic controller (PLC) has been introduced in various manufacturing sites as represented by a factory automation (FA) system. The control device as above is one type of computer, and can control a control target such as a manufacturing device or a manufacturing facility when a control program designed in accordance with the control target is executed. In general, the control program is created by using a development support device that is provided separately from the controller.

The control program as above is generally written with use of variables declared in advance. For example, Japanese Patent Laying-Open No. 2005-352612 (Patent Literature 1) discloses a program development support device that can enhance the development efficiency of a control program by enhancing the searchability of variables. In the program development support device of Patent Literature 1, the searchability of the variables is enhanced by performing narrowing-down that list-displays only variables with variable names including a keyword (character string) in accordance with a specification of the character string when an operand for a predetermined instruction is input.

### CITATION LIST

### PATENT LITERATURE

PTL 1: Japanese Patent Laying-Open No. 2005-352612

### SUMMARY OF INVENTION

### TECHNICAL PROBLEM

In the source program of the control program, a definition list for declaring variables is provided, and the variables declared on the definition list is usable in the source code.

Meanwhile, the following occurs when the control program is changed or edited. A memory region corresponding to variables deleted in the source code is also secured at the time of execution of the control program when those variables are remaining on the definition list. Therefore, it is preferred that unnecessary variables be deleted from the definition list in terms of efficiently using the memory region of the control device.

Meanwhile, at the time of execution of the control program, the control target is controlled by constructing a network between the control device and the control target, and hence there is also a fear that the control target side may be affected when necessary variables are deleted.

The present disclosure has been made to solve the problem as described above, and an objective in a certain aspect is to provide a development support device capable of suitably extracting a delible unnecessary variable in a control program for a control device that controls a control target. An objective in another aspect is to provide a development support method capable of suitably extracting a delible unnecessary variable in a control program. An objective in still another aspect is to provide a development support program capable of suitably extracting a delible unnecessary variable in a control program.

### SOLUTION TO PROBLEM

According to one example of the present disclosure, a development support device for supporting development of a control program for a control device that controls a control target is provided. The development support device includes a storage unit, an extraction unit, an acquisition unit, and a determination unit. The storage unit is configured to store a source code of the control program and a first list that declares a plurality of variables used in the source code. The extraction unit is configured to extract a first variable that is unused in the source code from the plurality of variables on the first list. The acquisition unit is configured to acquire information for specifying a second variable used by the control target out of the plurality of variables in an execution state of the control program. The determination unit is configured to determine that a third variable that does not correspond to the second variable out of the first variable is delible from the first list on the basis of a result of extraction by the extraction unit and the information acquired by the acquisition unit.

According to this disclosure, the development support device can determine the variables delible from the first list by excluding the second variables used in the control target from the unused variables in the source code of the control program. As a result, the variables delible from the control program can be suitably extracted while excluding the variables that affect the side of the external apparatuses when deleted.

In the disclosure described above, the control target may be connected to the control device by a network and configured to read out a variable indicated on a second list created in advance from the control device during execution of the control program. The acquisition unit may be configured to acquire information specifying the variable indicated on the second list from the control target via the control device or directly from the control target.

According to this disclosure, the information specifying the second variables used by the control target can be easily acquired with use of the list (second list) created at the time of execution of the control program.

In the disclosure described above, the control target may be connected to the control device by a network and configured to access the control target via the network and read out some variables out of the plurality of variables during execution of the control program. The control device is configured to retain a variable name read out from the control target during execution of the control program as access information. The acquisition unit may be configured to acquire the access information from the control device as the information at the time of execution of the control program.

According to this disclosure, even when the second variables used by the control target cannot be specified with use of the list, the second variables can be specified with use of the access information retained in the control device.

In the disclosure described above, the development support device may further include a variable deletion unit configured to delete the third variable from the first list.

According to this disclosure, the first list can be automatically updated to a content in which the third variables determined to be delible by the determination unit is deleted.

In the disclosure described above, the development support device may further include an interface unit for inputting an operation of a user. The extraction unit, the acquisition unit, and the determination unit may be configured to operate in accordance with an input of a first operation that activates deletion processing of an unnecessary variable on the interface unit. The interface unit may be configured to output a message asking the user whether to delete the third variable extracted by the determination unit from the first list. The variable deletion unit may be configured to operate in accordance with an input of a second operation that gives a command for deleting the third variable in accordance with the message on the interface unit.

According to this disclosure, in the deletion processing of the unnecessary variables activated in accordance with the user operation, the third variables determined to be delible by the determination unit can be deleted from the first list after confirmation by the user.

In the disclosure described above, the extraction unit, the acquisition unit, and the determination unit may be configured to operate after synchronization of a version of the control program is secured between the control device and the development support device, when the first operation is input.

According to this disclosure, the variables delible from the first list can be extracted by confirming that the variables in the source program and the variables in the control program executed by the control device match each other.

In another example of the present disclosure, a development support method of a control program for a control device that controls a control target is provided. The development support method is executed by a computer. The development support method includes: extracting a first variable that is unused in a source code of the control program from a list that declares a plurality of variables used in the source code; acquiring information for specifying a second variable used by the control target out of the plurality of variables in an execution state of the control program; and determining that a third variable that does not correspond to the second variable out of the first variable is delible from the list on the basis of a result of extraction by the extracting and the information acquired by the acquiring.

In still another example of the present disclosure, a development support program of a control program for a control device that controls a control target is provided. The development support program causes a computer to execute: extracting a first variable that is unused in a source code of the control program from a list that declares a plurality of variables used in the source code; acquiring information for specifying a second variable used by the control target out of the plurality of variables in an execution state of the control program; and determining that a third variable that does not correspond to the second variable out of the first variable is delible from the list on the basis of a result of extraction by the extracting and the information acquired by the acquiring.

According to this disclosure, the development support method and the development support program can determine the variables delible from the list by excluding the second variables used in the control target from the unused variables in the source code of the control program. As a result, the variables delible from the control program can be suitably extracted while excluding the variables that affect the side of the external apparatuses when deleted.

### ADVANTAGEOUS EFFECTS OF INVENTION

According to the present disclosure, it becomes possible to suitably extract the delible unnecessary variable in the control program for the control device that controls the control target.

### BRIEF DESCRIPTION OF DRAWINGS

Fig. 1 is an outline diagram illustrating one example of a configuration of an FA system to which a development support device according to an embodiment of the present invention is applied.
Fig. 2 is a schematic diagram illustrating one example of a hardware configuration of the development support device.
Fig. 3 is a conceptual diagram describing an operation of a control program.
Fig. 4 is a conceptual diagram describing one example of the control program.
Fig. 5 is an outline diagram describing an aspect of accessing a control device from an external apparatus.
Fig. 6 is a block diagram describing a configuration for unnecessary-variable deletion processing by the development support device according to the present embodiment.
Fig. 7 is a flowchart of the unnecessary-variable deletion processing by the development support device according to the present embodiment.
Fig. 8 is a flowchart describing a modified example of the unnecessary-variable deletion processing by a development support method according to the present embodiment.

### DESCRIPTION OF EMBODIMENTS

Hereinafter, with reference to the drawings, each embodiment of the present invention will be described. In the following description, the same components and constituents are given the same reference characters. The same applies to names and functions thereof. Therefore, a detailed description thereof will not be repeated in principle.

### <Application Example>

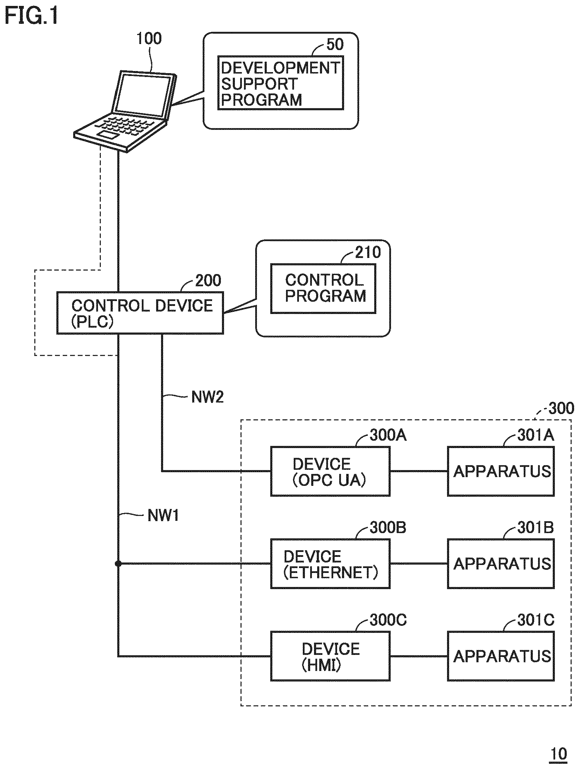

Fig. 1 is an outline diagram illustrating one example of a configuration of an FA system 10 to which a development support device according to an embodiment of the present invention is applied. First, with reference to Fig. 1, a system configuration of FA system 10 is described.

FA system 10 includes one or more development support devices 100, one or more control devices (controllers) 200, and external apparatuses 300 controlled by control device 200.

Development support device 100 is a notebook or desktop personal computer (PC), a tablet terminal, a smartphone, or other information processing devices, for example.

A development support program 50 is installed in development support device 100. Development support program 50 is an application for supporting development of a control program 210 for control device 200. Development support program 50 is "Sysmac Studio" manufactured by OMRON Corporation, for example. A user can design a control program for control device 200 on development support program 50 and download designed control program 210 to the controller. Alternatively, development support device 100 can upload data and the like from control device 200.

Control device 200 and external apparatuses 300 are connected to a network NW1 to which development support device 100 can be connected. Ethernet (R) and the like are employed as network NW1. Control device 200 is configured by a PLC, for example.

Control device 200 and external apparatuses 300 are connected to a network NW2. A field network that ensures data arrival time and performs fixed period communication is preferably employed as network NW2. As a field network performing the fixed period communication as above, OPC UA (R) and the like are known.

External apparatuses 300 are configured by various industrial apparatuses, various sensors, a human machine interface (HMI) apparatus, and the like used to automate a production process. External apparatuses 300 include apparatuses 301A to 301C and devices 300A to 300C connected to network NW1 or NMW2. Apparatuses 301A to 301C are communicably connected to control device 200 by devices 300A to 300C via networks NW1, NW2. As a result, apparatuses 301A to 301C can be controlled by a control program executed by control device 200. In other words, external apparatus 300 corresponds to a "control target" controlled by the control program.

In the example of Fig. 1, device 300A connected to apparatus 301A is connected to network NW2 to which OPC UA is applied. Device 300B connected to apparatus 301B and device 300C connected to apparatus 301C are connected to network NW1 to which Ethernet is applied. In a configuration in which FA system 10 includes a plurality of control devices (controllers) 200, a network (not shown) between controllers can be configured between the controllers, for example, between control device 200 in Fig. 1 and another control device (not shown) with use of OPC UA, for example.

### <Configuration of Development Support Device>

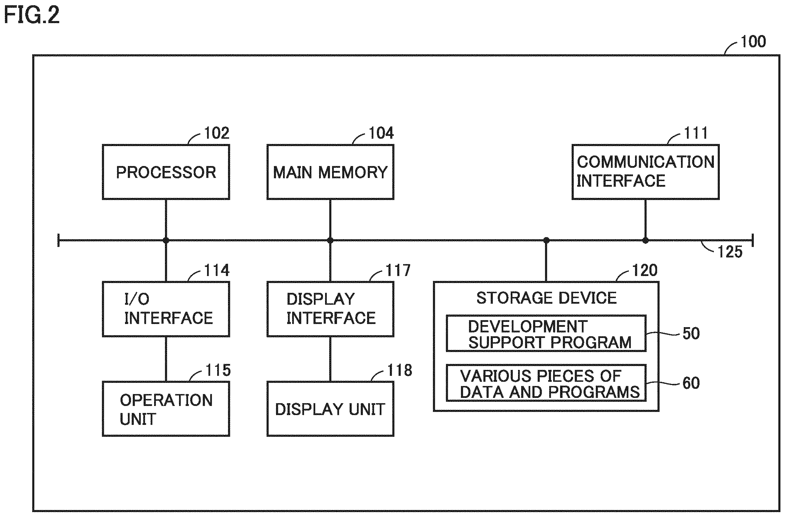

Fig. 2 illustrates a schematic diagram illustrating one example of a hardware configuration of development support device 100.

Development support device 100 is formed by a computer configured according to a general-purpose computer architecture, for example. Development support device 100 includes a processor 102 such as a central processing unit (CPU) or a micro-processing unit (MPU), a main memory 104, a communication interface 111, an input/output (I/O) interface 114, a display interface 117, and a nonvolatile storage device 120. These components are communicably connected to each other via an internal bus 125.

Processor 102 activates a development tool of control program 210 (see Fig. 1) by loading development support program 50 stored in storage device 120 to main memory 104 and executing development support program 50. Storage device 120 stores therein not only development support program 50 but also various pieces of data and a program 60. A source program of control program 210 is stored in main memory 104 or storage device 120. In other words, main memory 104 and storage device 120 corresponds to one example of a "storage unit".

Communication interface 111 exchanges data with other communication apparatuses via a network. Those other communication apparatuses include control device 200 and external apparatuses 300 illustrated in Fig. 1 and a server (not shown), for example. Development support device 100 may be configured to be able to download various programs such as development support program 50 from those other communication apparatuses via communication interface 111.

I/O interface 114 is connected to an operation unit 115 and fetches a signal indicating a user operation from operation unit 115. Operation unit 115 is typically formed by a keyboard, a mouse, a touch screen, a touch pad, and the like, and receives an operation from the user. Operation unit 115 may be configured integrally with development support device 100 or may be configured separately from development support device 100.

Display interface 117 is connected to a display unit 118 and transmits an image signal for displaying an image to display unit 118 in response to a command from processor 102 or the like. Display unit 118 is configured by a liquid crystal display (LCD), an organic electro luminescence (EL) display, or the like and presents various pieces of information to the user. Display unit 118 may be configured integrally with development support device 100 or may be configured separately from development support device 100.

Fig. 2 illustrates a configuration example in which necessary functions are provided when processor 102 such as a CPU executes a program. However, some or all of those provided functions may be implemented with use of a dedicated hardware circuit (for example, an application specific integrated circuit (ASIC) or a field-programmable gate array (FPGA)). In this case, a plurality of OSs for different purposes may be parallelly executed, and necessary applications may be executed on each OS with use of a virtualization technology. In the description above, an example in which development support device 100 executes all processing has been exemplified. However, the present invention is not limited to the above, and a plurality of devices may provide functions as described above in cooperation with each other. Some or all of the functions may be realized with use of a calculation resource referred to as a so-called cloud on a server.

### <Control Program>

Next, the control program is described.

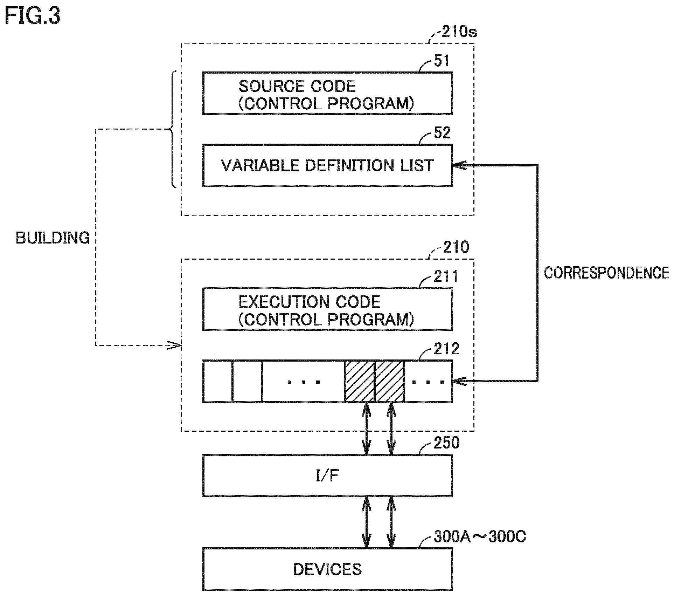

Fig. 3 illustrates a conceptual diagram describing an operation of the control program.

In development support device 100, a source program 210s including a source code 51 and a variable definition list 52 is created by an operation of the user using operation units 115 and 118. Source program 210s including source code 51 and variable definition list 52 is edited, as appropriate, by an operation of the user on development support device 100. In Fig. 3, source code 51 and variable definition list 52 are separately indicated, but source code 51 and variable definition list 52 can be an integrated file in source program 210s. Source program 210s can typically be written by freely-selected languages such as a ladder diagram (LD), an instruction list (IL), a structured text (ST), a function block diagram (FBD), a sequential function chart (SFC), and the like defined in IEC61131-3. In the description below, as a typical example, a case where the source program is written by a ladder program (LD) is described.

In development support device 100, source program 210s is built. As a result, an execution code 211 of control program 210 is created and downloaded to control device 200. At this time, in control device 200, a memory region 212 for storing therein variables declared on variable definition list 52 is secured for control program 210.

Devices 300A to 300C can access the variables in memory region 212 by performing data communication by network NW1 or NW2 via a network interface 250. For example, in the example in Fig. 3, a variable stored in a region in which diagonal lines are drawn is accessed from external apparatuses 300 (devices 300A to 300C). On the contrary, data can also be input to control device 200 (memory region 212) from the side of devices 300A to 300C.

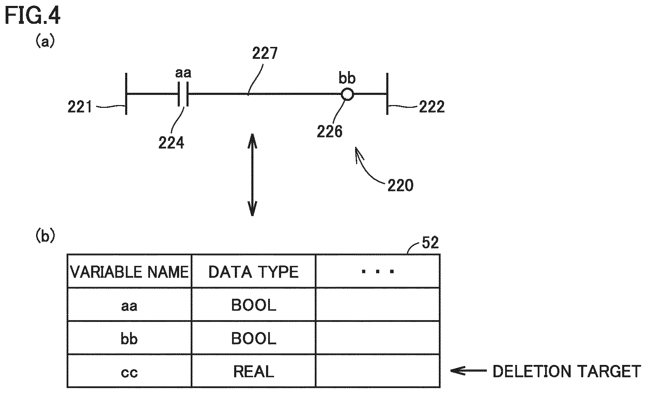

Fig. 4 illustrates a conceptual diagram describing one example of the control program. Fig. 4(a) illustrates one example of a ladder circuit written by the ladder program that is one example of the control program. Fig. 4(b) illustrates one example of the variable definition list described in Fig. 3.

As illustrated in Fig. 4(a), the ladder program is expressed by a ladder circuit 220 illustrating a logic circuit using circuit elements and a connection line between an input-side bus bar 221 and an output-side bus bar 222 in a ladder-like form.

In the example in Fig. 4(a), ladder circuit 220 includes a contact 224 that is turned on/off in accordance with the value of a variable aa, and a coil 226 that outputs the on/off result as a variable bb. The ladder circuit is drawn by connecting circuit elements such as contact 224 and coil 226 to each other by a connection line 227. For example, variable bb is further used as a variable that opens and closes a contact of another ladder circuit (not shown). Alternatively, variable aa is an output value of a coil of another ladder circuit (not shown). By a hierarchical combination of the ladder circuits as above, a control operation for controlling external apparatuses 300 by control device 200 can be written.

As illustrated in Fig. 4(b), variable definition list 52 is created by declaring at least a variable name and a data type of the variable for each variable. The data type is selectively set from "BOOL", "REAL", "LREAL", and the like defined in advance. As described in Fig. 3, when the source program is built, a data region having a capacity in accordance with the selected data type is secured for each of the variables declared on variable definition list 52.

If a case where the source program is configured by ladder circuit 220 in Fig. 4(a) and variable definition list 52 in Fig. 4(b) is supposed, variables aa and bb are used in the ladder circuit (source code). Meanwhile, although a variable cc is declared, variable cc is unused in the ladder circuit. A region for storing therein variable cc is secured in memory region 212 of control device 200 when the source program is built in this case as well. Therefore, the memory region of control device 200 can be freed up by deleting unused variable cc from variable definition list 52. As a result, an unnecessary memory region does not need to be secured, and hence the memory usage efficiency of control device 200 improves.

Meanwhile, there may be variables accessed from external apparatuses 300 via networks NW1, NW2 even when the variables are unused in the ladder circuit, in other words, the source program. Therefore, when variables unused in the source program are extracted and are deleted from automatically variable definition list 52, there is a fear that the side of external apparatuses 300 may be affected by deleting the variables as described above.

### <Access from External Apparatus>

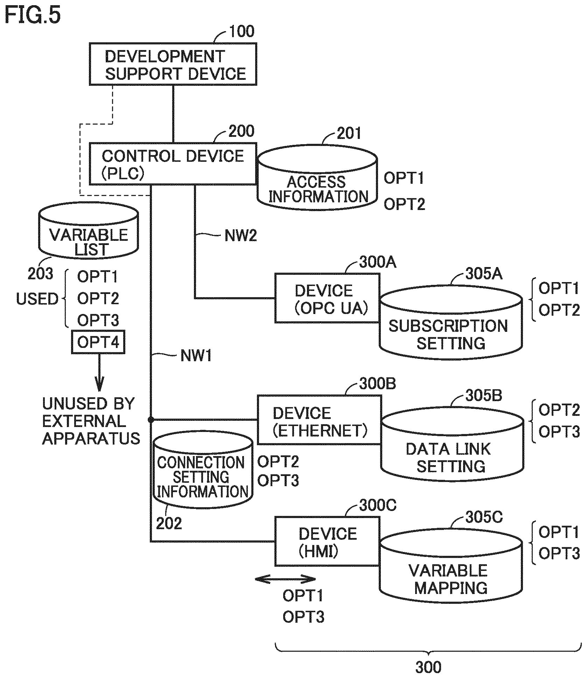

Next, an aspect of accessing control device 200 from external apparatus 300 is described with reference to Fig. 5.

As illustrated in Fig. 5, a variable list 203 corresponding to variable definition list 52 is also created for control device 200 by building a source program created or edited by development support device 100. In other words, variables declared on variable definition list 52 are included in variable list 203. In the example in Fig. 5, variables OPT1 to OPT4 are included in the variables defined on variable definition list 52 and variable list 203.

In device 300A connected to control device 200 by network NW2, variables regularly read out by fixed period communication of the network are defined by a subscription setting 305A at the time of execution of the control program. In the example in Fig. 5, device 300A acquires the values of variables OPT1, OPT2 from control device 200 by accessing those variables in accordance with subscription setting 305A by fixed period communication. The values of variables OPT1, OPT2 are used for the monitoring of the state quantity and the like in apparatus 301A.

Control device 200 stores an access history from devices 300A to 300C as access information 201 at the time of execution of the control program. Therefore, the variables (here, OPT1, OPT2) accessed from device 300A to control device 200 can be specified on the basis of access information 201.

In device 300B connected to control device 200 by network NW1, a data link setting 305B that defines the correspondence relationship (link) between the variables to be read out from control device 200 and the variables in device 300B is created.

In the example in Fig. 5, device 300B acquires the values of variables OPT2, OPT3 of control device 200 by accessing those variables in accordance with data link setting 305B. The values of variables OPT2, OPT3 can be used in apparatus 301B in a similar manner as described above.

In control device 200, connection setting information 202 indicating that variables OPT2, OPT3 are access targets is created in correspondence to data link setting 305B.

It is assumed that device 300C has a protocol in common with development support device 100. Therefore, device 300C can exchange data with development support device 100 directly or via control device 200 by network NW1. For example, device 300C acquires the values of variables OPT1, OPT3 defined in a variable mapping 305C in advance from control device 200 by accessing those variables. For example, device 300C is an HMI apparatus such as a display. The values of variables OPT1, OPT3 are used for displaying on the display.

Development support device 100 can specify each of the variables accessed from devices 300B and 300C connected to network NW1 in accordance with connection setting information 202 and variable mapping 305C.

Therefore, development support device 100 can determine that, out of variables OPT1 to OPT4 included in variable definition list 52 and variable list 203, variables OPT1 to OPT3 are used in external apparatuses 300 and variable OPT4 is unused in external apparatuses 300. In other words, when variable OPT4 is unused in the source program, it can be determined that the side of external apparatuses 300 is not affected even when variable OPT4 is deleted.

The variables accessed from devices 300B and 300C can also be specified on the basis of access information 201 in control device 200, but information specifying those variables in accordance with connection setting information 202 and variable mapping 305C can be easily acquired.

### <Unnecessary-variable Deletion Processing According to Present Embodiment>

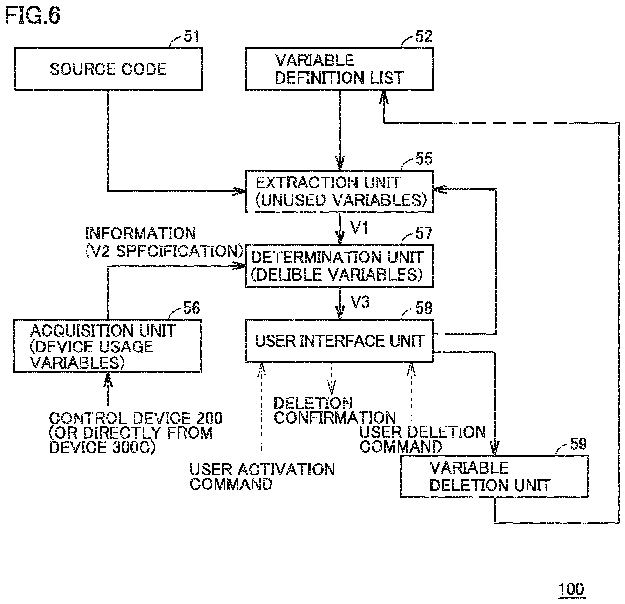

Fig. 6 is a block diagram describing a configuration for unnecessary-variable deletion processing by the development support device according to the present embodiment.

Development support device 100 includes an extraction unit 55, an acquisition unit 56, a determination unit 57, a user interface unit 58, and a variable deletion unit 59. For example, when processor 102 of development support device 100 executes development support program 50, each of acquisition unit 56, determination unit 57, user interface unit 58, and variable deletion unit 59 is realized as some of functions of the program. User interface unit 58 covers I/O interface 114 and display interface 117 illustrated in Fig. 2.

User interface unit 58 starts the unnecessary-variable deletion processing when an activation command for the unnecessary-variable deletion processing is input to operation unit 115. For example, the user can input the activation command for the unnecessary-variable deletion processing by performing selecting and inputting on a menu screen displayed on display unit 118. The operation for the activation command corresponds to a "first operation".

When the unnecessary-variable deletion processing is started, extraction unit 55 collates source code 51 and variable definition list 52 and extracts unused variables V1 that are unused in source code 51. For example, in the example in Fig. 4, variable cc is extracted as unused variable V1. Unused variable V1 corresponds to a "first variable", and variable definition list 52 corresponds to one example of a "first list" or a "list".

In Fig. 6, an example in which variables OPT1 to OPT4 illustrated in Fig. 5 are extracted as unused variables V1 is assumed by taking the relevance with Fig. 5 into consideration.

As described in Fig. 5, acquisition unit 56 acquires access information 201 and connection setting information 202 from control device 200. Acquisition unit 56 acquires variable mapping 305C of device 300C via control device 200 or directly from device 300C. Access information 201, connection setting information 202, and variable mapping 305C correspond to one example of information for specifying device usage variables V2 used in external apparatuses 300 (control target). It is understood that variables OPT1 to OPT3 can be specified as device usage variables V2 by the information in the example in Fig. 5. In other words, device usage variable V2 corresponds to a "second variable", and connection setting information 202 and variable mapping 305C correspond to one example of a "second list".

Determination unit 57 determines that variables not corresponding to device usage variables V2 out of unused variables V1 are delible variables V3 delible from control program 210 on the basis of unused variables V1 extracted by extraction unit 55 and device usage variables V2 specified from the information acquired by acquisition unit 56. In the example in Fig. 5, variable OPT4 can be extracted as delible variable V3.

User interface unit 58 notifies the user of delible variables V3 and requests the user to confirm whether the deletion of delible variables V3 may be executed with use of display unit 118. For example, characters and figures for clicking "YES" or "NO" for a display indicating "Would you like to delete these variables?" can be output to display unit 118.

User interface unit 58 generates an automatic deletion command to variable deletion unit 59 when the deletion command of the user is input when "YES" is clicked on the display. The operation for the deletion command corresponds to a "second operation".

When the automatic deletion command is input, variable deletion unit 59 deletes delible variables V3 from the variables included in variable definition list 52. From the above, variable definition list 52 is updated to a content in which delible variables V3 are deleted.

As a result, according to development support device 100 according to the present embodiment, delible variables V3 delible from variable definition list 52 can be automatically determined while excluding device usage variables V2. Variable definition list 52 can be updated to a content in which automatically determined delible variables V3 are deleted.

When the update of variable definition list 52 is completed, user interface unit 58 can output a message indicating that the unnecessary-variable deletion processing has ended to the user with use of display unit 118 and the like. In addition, a message prompting rebuilding of the source program (source code) may also be output to the user.

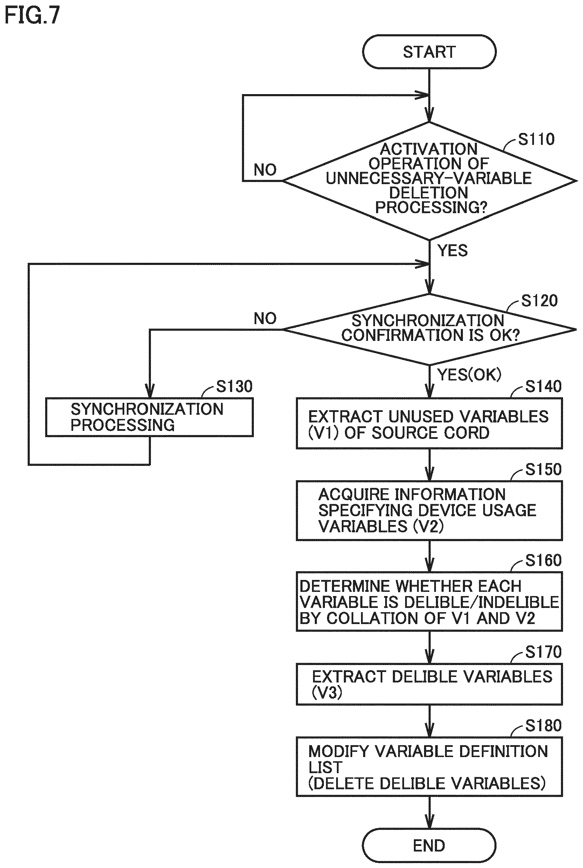

Fig. 7 is a flowchart of the unnecessary-variable deletion processing by the development support device according to the present embodiment. Processing of each step illustrated in Fig. 7 can be typically realized by software processing of executing development support program 50 by processor 102 of development support device 100.

In Step S 110, development support device 100 determines whether the activation command of the unnecessary-variable deletion processing is input from the user. When the user command is not input (when it is determined that S110 is NO), processing of Step S120 and thereafter is placed on standby.

The processing proceeds to Step S120 when the user gives a command for activating the unnecessary-variable deletion processing (when it is determined that S110 is YES). In Step S120, development support device 100 determines whether the control program is synchronized between development support device 100 and control device 200. When there is synchronization (when it is determined that S120 is YES), it can be confirmed that the variables included in variable definition list 52 of the source program and the variables included in variable list 203 of control device 200 match each other.

Meanwhile, when there is no synchronization (when it is determined that S120 is NO), development support device 100 executes synchronization processing by Step S130, and then executes the determination of Step S120 again. As above, processing of Step S140 and thereafter is executed after a state in which the variables match each other between variable definition list 52 and variable list 203 is confirmed.

In Step S140, development support device 100 extracts unused variables V1 that are unused in source code 51 by processing similar to that of extraction unit 55 in Fig. 6. In Step S150, development support device 100 acquires information for specifying device usage variables V2 used in external apparatuses 300 (control target), specifically, access information 201, connection setting information 202, and variable mapping 305C in Fig. 5 by processing similar to that of acquisition unit 56 in Fig. 6. Steps S140 and S150 may be parallelly processed or Step S150 may be executed before Step S140 in a manner opposite from Fig. 7.

By Step S160 after Steps S140 and S150, development support device 100 determines whether each of unused variables V1 is delible or indelible by collating unused variables V1 (S140) and device usage variables V2 (S150) by processing similar to that of determination unit 57 in Fig. 6. As a result, in Step S170, the delible variables V3 can be extracted as with determination unit 57 in Fig. 6.

In Step S180, development support device 100 deletes delible variables V3 from the variables included in variable definition list 52 as with variable deletion unit 59 illustrated in Fig. 6.

According to the control processing illustrated in Fig. 7, variable definition list 52 can be updated to a content in which automatically determined delible variables V3 are deleted by the activation of the unnecessary-variable deletion processing responding to the user activation command.

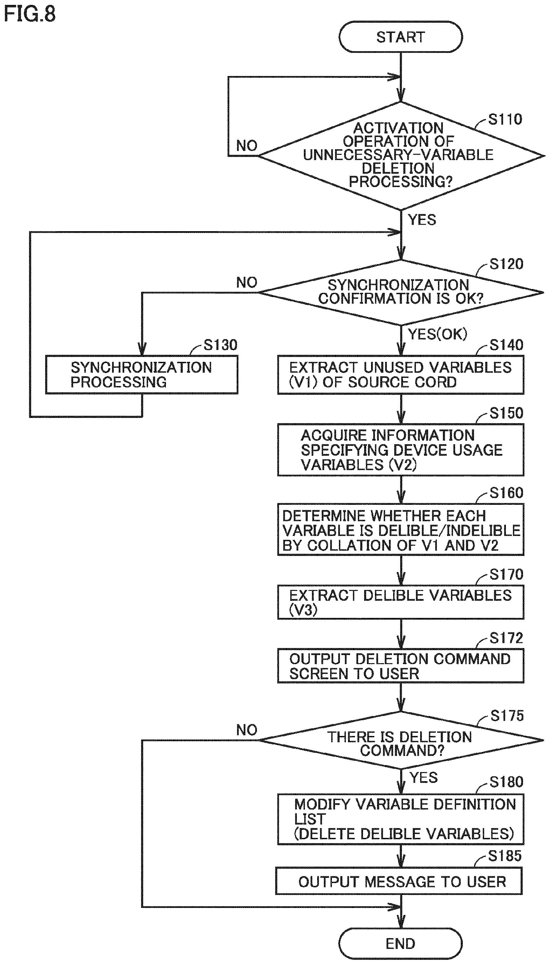

Alternatively, as illustrated in Fig. 8, development support device 100 can execute Steps S172, S175, S185 for the user interface processing also described in Fig. 6 in addition to the control processing in Fig. 7.

When the extraction of delible variables V3 by Step S170 is completed, development support device 100 notifies the user of delible variables V3 and requests the user to confirm whether the deletion of delible variables V3 may be executed with use of display unit 118 by S172.

Development support device 100 determines a user command with respect to the confirmation in Step S172 by Step S175. When a deletion command is input from the user, for example, when "YES" is clicked for a display indicating "Would you like to delete these variables?" by Step S170, it is determined that Step S175 is YES, and the processing proceeds to Step S180 for deleting delible variables V3.

Meanwhile, when "NO" is clicked for the display, it is determined that Step S175 is NO. Therefore, Step S180 is skipped, and the unnecessary-variable deletion processing is ended. In this case, delible variables V3 are not deleted, and variable definition list 52 is maintained to be the content before the activation of the unnecessary-variable deletion processing.

When variable definition list 52 is updated by Step S 180, development support device 100 outputs a message indicating that the unnecessary-variable deletion processing has ended to the user by Step S 185. When the variable deletion by Step S 180 is executed, a message prompting the rebuilding of the source program for reflecting variable definition list 52 after the update may be further output in Step S 185.

As described above, according to the present disclosure, the unnecessary variables that are delible in the control program can be suitably extracted by extracting the unused variables (V1) in the source program and specifying the variables (V2) accessed from external apparatuses 300 (control target) at the time of execution of the control program.

### <Appendix>

The present embodiment and the modified example as described above include technical ideas as below.

### [Configuration 1]

A development support device (100) for supporting development of a control program (210) for a control device (200) that controls a control target (300), the development support device including:
a storage unit (104, 120) configured to store a source code (51) of the control program and a first list (52) that declares a plurality of variables used in the source code;
an extraction unit (55) configured to extract a first variable (V1) that is unused in the source code from the plurality of variables on the first list;
an acquisition unit (56) configured to acquire information (201, 202, 305C) for specifying a second variable (V2) used by the control target out of the plurality of variables in an execution state of the control program; and
a determination unit (57) configured to determine that a third variable (V3) that does not correspond to the second variable out of the first variable is delible from the first list on the basis of a result of extraction by the extraction unit and the information acquired by the information acquisition unit.

### [Configuration 2]

The development support device according to configuration 1, in which
the control target (300) is connected to the control device (200) by a network and configured to read out a variable indicated on a second list (202, 305C) created in advance from the control device during execution of the control program, and
the acquisition unit (56) is configured to acquire information specifying the variable indicated on the second list from the control target via the control device or directly from the control target.

### [Configuration 3]

The development support device according to configuration 1, in which
the control target (300) is connected to the control device (200) by a network (NW1) and configured to access the control target via the network and read out some variables out of the plurality of variables during execution of the control program,
the control device retains a variable name read out from the control target during execution of the control program as access information (201), and
the acquisition unit (56) is configured to acquire the access information from the control device as the information at the time of execution of the control program.

### [Configuration 4]

The development support device according to any one of configurations 1 to 3, further including a variable deletion unit (59) is configured to delete the third variable (V3) from the first list (52).

### [Configuration 5]

The development support device according to configuration 4, further including an interface unit (58) for inputting an operation of a user, in which
the extraction unit (55), the acquisition unit (56), and the determination unit (57) are configured to operate in accordance with an input of a first operation that activates deletion processing of an unnecessary variable on the interface unit,
the interface unit is configured to output a message asking the user whether to delete the third variable (V3) extracted by the determination unit from the first list (52), and
the variable deletion unit (59) is configured to operate in accordance with an input of a second operation that gives a command for deleting the third variable in accordance with the message on the interface unit.

### [Configuration 6]

The development support device according to configuration 5, in which the extraction unit (55), the acquisition unit (56), and the determination unit (57) are configured to operate after synchronization of the control program (210) is secured between the control device (200) and the development support device (100) when the first operation is input.

### [Configuration 7]

A development support method of a control program (210) for a control device (200) that controls a control target (300), the development support method being executed by a computer, the development support method including:
extracting (S140) a first variable (V1) that is unused in a source code (51) of the control program from a list (52) that declares a plurality of variables used in the source code;
acquiring (S150) information (201, 202, 305C) for specifying a second variable (V2) used by the control target out of the plurality of variables in an execution state of the control program; and
determining (S160, S170) that a third variable (V3) that does not correspond to the second variable out of the first variable is delible from the list on the basis of a result of extraction by the extracting and the information acquired by the acquiring.

### [Configuration 8]

A development support program (50) of a control program (210) for a control device (200) that controls a control target (300), the development support program causing a computer to execute:
extracting (S140) a first variable (V1) that is unused in a source code (51) of the control program from a list (52) that declares a plurality of variables used in the source code;
acquiring information (201, 202, 305C) for specifying a second variable (V2) used by the control target out of the plurality of variables in an execution state of the control program; and
determining (S160, S170) that a third variable (V3) that does not correspond to the second variable out of the first variable is delible from the list on the basis of a result of extraction by the extracting and the information acquired by the acquiring.

It is to be understood that the embodiment disclosed above is merely an example in all aspects and in no way intended to limit the invention. The scope of invention is not limited to the description above, and is defined by the scope of claims. All modifications made within the scope and spirit equivalent to those of the claims are intended to be included in the invention.

### REFERENCE SIGNS LIST

10 FA system; 50 development support program; 51 source code; 52 variable definition list 55 extraction unit; 56 acquisition unit; 57 determination unit; 58 user interface unit; 59 variable deletion unit; 100 development support device; 102 processor; 104 main memory; 111 communication interface; 114 I/O interface; 115 operation unit; 117 display interface; 118 display unit; 120 storage device; 125 internal bus; 200 control device; 201 access information; 202 connection setting information; 233 variable list; 210 control program; 210s source program; 211 execution code; 212 memory region; 220 ladder circuit; 221 input-side bus bar; 222 output-side bus bar; 224 contact; 226 coil; 227 connection line; 250 network interface; 300 external apparatus; 300A to 300C device; 301A to 301C apparatus; 305A subscription setting; 305B data link setting; 305C variable mapping; NW1, NW2 network; OPT1 to OPT4, aa, bb, cc variable.

## Claims

1. A development support device for supporting development of a control program for a control device that controls a control target, the development support device comprising:
a storage unit configured to store a source code of the control program and a first list that declares a plurality of variables used in the source code;
an extraction unit configured to extract a first variable that is unused in the source code from the plurality of variables on the first list;
an acquisition unit configured to acquire information for specifying a second variable used by the control target out of the plurality of variables in an execution state of the control program; and
a determination unit configured to determine that a third variable that does not correspond to the second variable out of the first variable is delible from the first list on a basis of a result of extraction by the extraction unit and the information acquired by the acquisition unit.

2. The development support device according to claim 1, wherein the control target is connected to the control device by a network and configured to read out a variable indicated on a second list created in advance from the control device during execution of the control program, and
the acquisition unit is configured to acquire information specifying the variable indicated on the second list from the control target via the control device or directly from the control target.

3. The development support device according to claim 1, wherein
the control target is connected to the control device by a network and configured to access the control target via the network and read out some variables out of the plurality of variables during execution of the control program,
the control device is configured to retain a variable name read out from the control target during execution of the control program as access information, and
the acquisition unit is configured to acquire the access information from the control device as the information at time of execution of the control program.

4. The development support device according to any one of claims 1 to 3, further comprising a variable deletion unit configured to delete the third variable from the first list.

5. The development support device according to claim 4, further comprising an interface unit for inputting an operation of a user, wherein
the extraction unit, the acquisition unit, and the determination unit are configured to operate in accordance with an input of a first operation that activates deletion processing of an unnecessary variable on the interface unit,
the interface unit is configured to output a message asking the user whether to delete the third variable extracted by the determination unit from the first list, and
the variable deletion unit is configured to operate in accordance with an input of a second operation that gives a command for deleting the third variable in accordance with the message on the interface unit.

6. The development support device according to claim 5, wherein the extraction unit, the acquisition unit, and the determination unit are configured to operate after synchronization of the control program is secured between the control device and the development support device, when the first operation is input.

7. A development support method of a control program for a control device that controls a control target, the development support method being executed by a computer, the development support method comprising:
extracting a first variable that is unused in a source code of the control program from a list that declares a plurality of variables used in the source code;
acquiring information for specifying a second variable used by the control target out of the plurality of variables in an execution state of the control program; and
determining that a third variable that does not correspond to the second variable out of the first variable is delible from the list on a basis of a result of extraction by the extracting and the information acquired by the acquiring.

8. A development support program of a control program for a control device that controls a control target, the development support program causing a computer to execute:
extracting a first variable that is unused in a source code of the control program from a list that declares a plurality of variables used in the source code;
acquiring information for specifying a second variable used by the control target out of the plurality of variables in an execution state of the control program; and
determining that a third variable that does not correspond to the second variable out of the first variable is delible from the list on a basis of a result of extraction by the extracting and the information acquired by the acquiring.
